# EUROPEAN PATENT APPLICATION

(11) **EP 2 071 014 A1**
(43) Date of publication of application: **17.06.2009**
(21) Application number: 08251436.5
(22) Date of filing: 15.04.2008
(51) Int. Cl.: C11B 3/10, C11C 1/08

(54) **Method for purification of oils for biodiesel processes**

(30) Priority: 14.12.2007 US 2157
(71) Applicant: Rohm and Haas Company, Philadelphia, PA 19106-2399 (US)
(72) Inventor: Banavali, Rajiv Manohar, Rydal, Pennsylvania 19046 (US); Schultz, Alfred Karl, Maple Glen, Pennsylvania 19002 (US); Hanlon, Robert Tryon, Philadelphia, Pennsylvania 19107 (US); Trejo, Jose Antonio, Lansdale, Pennsylvania 19446 (US)
(74) Representative: Kent, Venetia Katherine

(57) **Abstract**

A method for purification of crude triglycerides to be used as a raw material for production of biodiesel fuel. Crude triglycerides are contacted with a variety of adsorbents and ion exchange resins to reduce the levels of impurities.

## Description

### Background

This invention relates generally to a method for purification of triglycerides used as raw materials for biodiesel fuel production.

High fuel prices and environmental concerns are driving development of alternative fuels, especially those derived from renewable resources. One such fuel, commonly known as "biodiesel" fuel, commonly contains methyl esters of fatty acids, and is burned in diesel engines. One source of biodiesel fuel is transesterification of triglycerides, such as vegetable oils with alcohols, typically with methanol. As the cost of raw materials keeps rising for the biodiesel industry, it is becoming more important to use a variety of crude, recycled, and non-edible triglyceride starting materials. These materials can be, for example, crude palm oil, yellow grease (waste restaurant grease), waste animal fat, algae oil, Jatropha oil etc. However, these materials contain many, and varied impurities which are unsuitable for the biodiesel process and undesirable in the fuel. Prior art methods exist for purification of oils, e.g., U.S. Pat. No. 6,960,673. However, the resultant oil from these methods may still contain high levels of impurities, namely, proteins, dissolved ions, residual phospholipids, vitamins, sterol glucosides, etc.

The problem addressed by this invention is to find an alternative method for purification of triglycerides used as raw materials for production of biodiesel fuels.

### Statement of Invention

The present invention is directed to a method for purification of crude triglycerides to be used as a raw material for production of biodiesel fuel. The method comprises steps of contacting a crude triglyceride stream with the following materials: (a) at least one adsorbent; (b) at least one phenolic resin, metal-containing resin or hydrous metal oxide; and (c) at least one cation exchange resin.

### Detailed Description

All percentages are weight percentages ("wt %"), and all temperatures are in °C, unless otherwise indicated. Weight percentages related to ion exchange resins or other resins are based on dry resin. As used herein the term "(meth)acrylic" refers to acrylic or methacrylic. The term "vinyl monomer" refers to a monomer suitable for addition polymerization and containing a single polymerizable carbon-carbon double bond. The term "styrene polymer" or "styrenic polymer" indicates a copolymer polymerized from a vinyl monomer or mixture of vinyl monomers containing at least one styrene monomer (styrene or substituted styrene) and/or at least one crosslinker, wherein the combined weight of styrene monomers and crosslinkers is at least 50 wt % of the total monomer weight, alternatively at least 75 wt %, alternatively at least 90 wt %. Styrene monomers include, e.g., styrene, α-methylstyrene, and ethylstyrene. A crosslinker is a monomer containing at least two polymerizable carbon-carbon double bonds, including, e.g., divinylaromatic compounds, di- and tri-(meth)acrylate compounds and divinyl ether compounds. Preferably, the crosslinker(s) is a divinylaromatic crosslinker, e.g., divinylbenzene. In one embodiment, a styrene polymer is made from a mixture of monomers that is at least 75% styrene and divinylaromatic crosslinkers, more preferably at least 90% styrene and divinylaromatic crosslinkers, and most preferably from a mixture of monomers that consists essentially of styrene and at least one divinylaromatic crosslinker. In another embodiment, a styrene polymer is made from a monomer mixture consisting essentially of at least one divinylaromatic crosslinker. The term "acrylic polymer" indicates a copolymer formed from a mixture of vinyl monomers containing at least one (meth)acrylic acid or ester, along with at least one crosslinker, wherein the combined weight of the (meth)acrylic acid(s) or ester(s) and the crosslinker(s) is at least 50 weight percent of the total monomer weight; preferably at least 75%, more preferably at least 90%, and most preferably from a mixture of monomers that consists essentially of at least one (meth)acrylic acid or ester and at least one crosslinker. The term "phenolic resin" indicates a crosslinked copolymer formed from an aliphatic aldehyde or ketone (e.g., formaldehyde) and phenol or a substituted phenol, or other aromatic compound, wherein the weight of phenol or substituted phenol monomer is at least 20% of the total monomer weight, alternatively at least 50%, alternatively at least 70%.

The term "gel" resin applies to a resin which was synthesized from a very low porosity (0 to 0.1 cm³/g), small average pore size (0 to 17 Å) and low B.E.T. surface area (0 to 10 m²/g) copolymer. The term "macroreticular" (or MR) resin is applied to a resin which is synthesized from a high mesoporous copolymer with higher surface area than the gel resins. The total porosity of the MR resins is between 0.1 and 0.7 cm³/g, average pore size between 17 and 500 Å and B.E.T. surface area between 10 and 200 m²/g. The term adsorbent resin is applied to a resin which can be functionalized or not, and which has very high surface area and porosity. These adsorbents have surface area between 200 and 1900 m²/g, average pore size between 17 and 1000 Å and total porosity between 0.7 and 200 cm³/g. The term "cation exchange resin" indicates a resin which is capable of exchanging positively charged species with the environment. They comprise negatively charged species which are linked to metal cations. The most common negatively charged species are carboxylic, sulfonic and phosphonic acid groups. The term "anion exchange resin" indicates a resin which is capable of exchanging negatively charged species with the environment. The term "strong base anion exchange resin" refers to an anion exchange resin that comprises positively charged species which are linked to anions. The most common positively charged species are quaternary amines and protonated secondary amines. Preferably, resins are in the form of commercially available resin beads having a harmonic mean size from 50 microns to 1500 microns, alternatively from 150 to 900 microns, alternatively from 300 to 600 microns. In some embodiments of the invention, resins are commercially available uniform particle size resin beads. The term "crude triglyceride stream" applies to the stream comprising triglyceride material flowing through the various purification media described herein. The crude triglyceride stream may, after treatment with several media, be substantially more pure than the starting crude triglyceride, but the same term is used to designate the stream throughout the process.

Adsorbents useful in this invention are resins having surface area between 200 and 1900 m²/g, average pore size between 17 and 1000 Å and total porosity between 0.7 and 200 cm³/g. Adsorbent resins include, e.g., phenolic, styrenic and acrylic resins. In some embodiments of the invention, the crude triglyceride stream is contacted with a styrenic adsorbent resin to remove proteins and a phenolic adsorbent resin to remove sterol glucosides. In a preferred embodiment of the invention, the styrenic adsorbent resin is a macroreticular resin, and the phenolic adsorbent resin has weakly basic anion exchange functionality. An example of a styrenic adsorbent resin is AMBERLITE™ XAD-16 (available from Rohm and Haas Co.). An example of a phenolic adsorbent resin is AMBERLITE™ XAD-761 (available from Rohm and Haas Co.).

In some embodiments of the invention, the cation exchange resin has carboxylic acid functionality ("weak acid" resin); in some embodiments it is a macroporous resin. In some embodiments of the invention, the resin is a cross-linked acrylic resin, preferably one cross-linked with divinylbenzene, e.g., a resin made from methacrylic acid and divinylbenzene. Examples of such resins are AMBERLITE™ IRC-50 and IR-120H (available from Rohm and Haas Co.).

In some embodiments of the invention, the cation exchange resin has sulfonic acid functionality ("strong acid" resin); in some embodiments it is a macroporous resin. In some embodiments, the resin is a crosslinked styrenic gel resin, e.g., a resin made from styrene and divinylbenzene, and functionalized by sulfonation.

A "metal-containing resin" is a resin containing at least one metal compound. Preferred metals include iron, aluminum, manganese, zirconium and titanium. In some embodiments of the invention, the metal-containing resin has from 2% to 35% metal, on a dry resin basis. In some embodiments, the metal content of the resin is at least 5%, alternatively at least 8%, alternatively at least 10%, alternatively at least 12%, alternatively at least 15%, alternatively at least 20%; the metal content is no greater than 30%, alternatively no greater than 28%, alternatively no greater than 25%. A preferred form for the metal is the hydrous oxide form, i.e., very insoluble compounds in water which are formed from the precipitation of a metal cation with a pH increase in the original solution. The hydrous oxide may be essentially oxides or hydroxides of a single metal or of a mixture of two or more metals. The charge on a hydrous oxide species depends largely upon the degree of acidity of the oxide and the media. They can exist as negatively, neutral or positively charged species. Variations in precipitation conditions for metal ions can result in different structures that can be relatively more or less reactive. The structure of the metallic hydrous oxides can be amorphous or crystalline.

In some embodiments of the invention, the resin used to support the metal is an acrylic resin functionalized with the functional group shown below:

RR¹N{(CH₂)ₓN(R²)}_{z}(CH₂)_{y}NR³R⁴

where R denotes the resin, to which the amine nitrogen on the far left is attached via an amide bond with an acrylic carbonyl group or via a C-N bond to a CH₂ group on the acrylic resin; R¹ and R²=H, Me or Et; x and y =1-4, z = 0-2 and R³ and R⁴ = Me, Et, Pr or Bu. A more preferred functionalization would have R attached via an amide bond; R¹=H or Me; z = 0 ; y = 1-4 and R³ and R⁴ = Me or Et. The most preferred embodiment would have R¹=H; y = 3 and R³ and R⁴ = Me. The amine functional group can be introduced by reacting a diamine which is alkylated on one end, e.g., 3-dimethylaminopropylamine (DMAPA) with the acrylic resin at high temperature (e.g., 170-189°C), under nitrogen pressure (e.g., between 35-60 psig (241-413 kPa)) for 8-24 hours.

In some embodiments of the invention, the phenolic resin, metal-containing resin or hydrous metal oxide is a hydrous metal oxide, e.g., ferric hydrous oxide or titanium hydrous oxide, either amorphous or crystalline. Preferably, hydrous metal oxide adsorbents have average particle sizes from 50 microns to 4 mm, alternatively from 150 microns to 1 mm. Preferably, the porosity is from 15 m²/g to 700 m²/g, alternatively from 100 m²/g to 350 m²/g.

In some embodiments of the invention, the crude triglyceride stream which has passed through: (a) at least one adsorbent; (b) at least one phenolic resin, metal-containing resin or hydrous metal oxide; and (c) at least one cation exchange resin is carried on to a transesterification process without further purification. In some embodiments of the invention, further purification steps are performed prior to transesterification.

In some embodiments of the invention, the crude triglyceride stream is further contacted with an anion exchange resin. The resin may be a weak base or strong base anion exchange resin. In some embodiments, the resin is either an acrylic resin or a styrenic resin.

In some embodiments of the invention, the crude triglyceride stream is further contacted with alumino-silicate adsorbents containing alumina, silica or a combination thereof, including, e.g., alumina, silica, quartz, feldspar, Celite, diatomaceous earth, rice husk ash, zeolite and andalusite. Preferably, the alumino-silicate adsorbents have average particle sizes from 100 microns to 2 mm, more preferably from 250 microns to 1 mm. Preferably, the porosity of the alumino-silicate adsorbents is from 45 m²/g to 1800 m²/g, more preferably from 150 m²/g to 1500 m²/g.

"Triglycerides" used in this invention are fats or oils comprising glycerine triesters of fatty acids. Fatty acids are acyclic aliphatic carboxylic acids containing from 8 to 22 carbon atoms; typically, they contain from 12 to 22 carbon atoms. With respect to carbon-carbon bonds, the fatty acid chains may be saturated, monounsaturated or polyunsaturated (typically 2 or 3 carbon-carbon double bonds). Natural fats may also contain small amounts of other esterified, or free fatty acids, as well as small amounts (1-4%) of phospholipids, e.g., lecithin, and very small amounts (<1%) of other compounds, e.g., tocopherols. Crude triglycerides also may contain a variety of other impurities, e.g., carotenes, sterols, phospholipids, salts, sterol glucosides, proteins, amino acids and vitamins. In some embodiments of the invention, crude triglycerides are animal fats.

In some embodiments of the invention, the purification of crude triglycerides is performed in a temperature range from about 20°C to 150°C. In some embodiments of the invention, the temperature is no greater than 130°C, alternatively no greater than 110°C, alternatively no greater than 100°C, alternatively no greater than 90°C, alternatively no greater than 80°C. In some embodiments of the invention, the temperature is at least 30°C, alternatively at least 40°C, alternatively at least 50°C, alternatively at least 55°C, alternatively at least 60°C. The higher temperatures listed above generally are required for higher molecular weight triglycerides or other triglycerides with high melting points.

Typical flow rates for treatment of crude triglycerides according to this invention are from 0.05 to 50 bed volumes ("BV")/hour. In some embodiments of the invention, the flow rate is at least 0.2 BV/hour, alternatively at least 2 BV/hour. In some embodiments of the invention, the flow rate is no more than 30 BV/hour, alternatively no more than 10 BV/hour. Flow rates through the various materials would be similar, but not necessarily the same.

The uniformity coefficient of an ion exchange resin bead particle size distribution is a measure of the width of the size distribution curve. The uniformity coefficient is defined as d60/d10 where d60 is the size of the opening through which exactly 60 volume % of the distribution passes, and d10 is the size of the opening through which exactly 10 volume % of the distribution passes. In some embodiments of the invention, the uniformity coefficient of the resin beads is no greater than 1.15, alternatively no greater than 1.10.

In some embodiments of the invention, the crude triglycerides contact an adsorbent resin before any other resin or hydrous metal oxide. In some embodiments of the invention, the crude triglycerides contact a phenolic resin, metal-containing resin or hydrous metal oxide after the adsorbent resin and before any other resin.

In some embodiments of the invention, a C₁-C₄ aliphatic alcohol is added to the crude triglyceride stream during the process. This facilitates direct transfer of the crude triglyceride stream to a reactor for transesterification. Suitable alcohols include, e.g., methanol, ethanol, propanol, isopropanol, butanol and isobutanol. Methanol is especially preferred.

## Claims

1. A method for purification of crude triglycerides to be used as a raw material for production of biodiesel fuel; said method comprising contacting a crude triglyceride stream with:
(a) at least one adsorbent; (b) at least one phenolic resin, metal-containing resin or hydrous metal oxide; and (c) at least one cation exchange resin.

2. The method of claim 1 in which an adsorbent is a resin having a surface area between 200 and 1900 m²/g, average pore size between 17 and 1000 Å and total porosity between 0.7 and 200 cm³/g.

3. The method of claim 2 in which the crude triglyceride stream contacts an adsorbent resin before any other resin or hydrous metal oxide.

4. The method of claim 3 in which the crude triglyceride stream contacts a phenolic resin, metal-containing resin or hydrous metal oxide after the adsorbent resin and before any other resin.

5. The method of claim 4 in which the crude triglycerides are animal fats.

6. The method of claim 5 in which said at least one phenolic resin, metal-containing resin or hydrous metal oxide is a metal-containing resin.

7. The method of claim 6 in which the metal comprises iron.

8. The method of claim 7 further comprising contacting the crude triglyceride stream with at least one alumino-silicate adsorbent.

9. The method of claim 7 further comprising contacting the crude triglyceride stream with at least one anion exchange resin.
